# EUROPEAN PATENT APPLICATION

(11) **EP 4 365 050 A1**
(43) Date of publication of application: **08.05.2024**
(21) Application number: 23207354.4
(22) Date of filing: 02.11.2023
(51) Int. Cl.: B60W 50/029

(54) **VEHICLE FOR PERFORMING MINIMAL RISK MANEUVER AND OPERATION METHOD THEREOF**

(30) Priority: 02.11.2022 KR 20220144362
(71) Applicant: HYUNDAI MOTOR COMPANY, Seoul 06797 (KR); Kia Corporation, Seocho-gu Seoul 06797 (KR); Ajou University Industry-Academic Cooperation Foundation, Suwon-si, Gyeonggi-do 443-721 (KR)
(72) Inventor: MIN, Young bin, 47515 Busan (KR); PARK, Jong Sung, 18237 Hwaseong-si, Gyeonggi-do (KR); SONG, Bong Sob, 13600 Seongnam-si, Gyeonggi-do (KR); LEE, Ji Min, 18473 Hwaseong-si, Gyeonggi-do (KR); LEE, Sung Woo, 16491 Suwon-si, Gyeonggi-do (KR)
(74) Representative: Isarpatent

(57) **Abstract**

In an embodiment, an autonomous vehicle includes a sensor unit configured to detect surrounding environment of the vehicle, generate surrounding environment information, monitor a state of the vehicle, and generate vehicle state information. A processor is configured to control autonomous driving of the vehicle based on one or both of the surrounding environment information and the vehicle state information, detect whether a failure occurs in a function required for autonomous driving of the vehicle based on the vehicle state information, determine one or both of a movable time and a movable distance, for indicating a fail-operational capability (FOC) of the vehicle, based on one or both of the vehicle state information and the surrounding environment information, and control the vehicle to be emergency stopped by performing a minimal risk maneuver based on one or both of the movable time and the movable distance.

## Description

### TECHNICAL FIELD

The present disclosure relates to a vehicle for performing a minimal risk maneuver and an operation method thereof.

### BACKGROUND

Recently, advanced driver assistance systems (ADAS) are being developed to assist the driving of a driver. The ADAS has multiple sub-classifications of technologies and provides convenience to the driver. Such ADAS is also called autonomous driving or autonomous driving system (ADS).

Meanwhile, an abnormality may occur in an autonomous driving system while a vehicle performs autonomous driving. The vehicle may be in a dangerous situation if appropriate measures to such abnormality of the autonomous driving system are not performed.

### SUMMARY

Accordingly, various embodiments of the present disclosure disclose a vehicle that performs a minimal risk maneuver (MRM) for removing (or reducing) risk when the vehicle detects a situation where normal autonomous driving is impossible during the autonomous driving of the vehicle, and disclose an operation method of the vehicle.

Various embodiments of the present disclosure disclose a method and apparatus for determining an MRM strategy based on a fail-operational capability (FOC) when a failure occurs in which normal autonomous driving is impossible during the autonomous driving of the vehicle.

Various embodiments of the present disclosure disclose a method and apparatus for determining a movable time and/or a movable distance, which indicate the FOC of the vehicle, based on a fault type of the failure, when a failure occurs during the autonomous driving of the vehicle, and for determining the MRM strategy based on the determined movable time and/or the determined movable distance.

The technical problem to be overcome by embodiments is not limited to the above-mentioned technical problems. Other technical problems not mentioned may be clearly understood from embodiments by a person having ordinary skill in the art.

One embodiment is an autonomous vehicle including at least one sensor configured to detect a surrounding environment of the vehicle, generate surrounding environment information, monitor a state of the vehicle, and generate vehicle state information. An embodiment may further include a processor configured to control autonomous driving of the vehicle based on the surrounding environment information and/or the vehicle state information. And, an embodiment may further include a controller configured to control operations of the vehicle in accordance with the control of the processor.

In an embodiment, the processor may be further configured to detect whether a failure occurs in a function required for the autonomous driving of the vehicle based on the vehicle state information, determine a movable time and/or a movable distance, which indicate a fail-operational capability (FOC) of the vehicle, based on the vehicle state information and/or the surrounding environment information, and control the vehicle to be emergency stopped by performing a minimal risk maneuver based on the movable time and/or the movable distance.

In an embodiment, the processor may determine a fault type of the failure based on the vehicle state information, and may determine the movable time and/or the movable distance, based on the fault type.

In an embodiment, the movable time may include a fault tolerant time interval (FTTI) and/or a fail operational time interval (FOTI). The FTTI may be a time interval from a time point when the failure occurs to a time point when a hazardous event is predicted to occur. The FOTI may be a time interval from a time point when the failure occurs to a time point when a safety algorithm for handling the failure is performed and the vehicle is predicted to be switched to a safe state.

In an embodiment, the safety algorithm may perform a failure handling function and/or an emergency operation. The FOTI may include a fault handling time interval (FHTI) and/or an emergency operation time interval (EOTI). The FHTI may be a time interval in which the failure handling function is performed in order that the vehicle is switched to the safe state, and the EOTI may be a time interval in which the emergency operation is performed in order that the vehicle is switched to the safe state.

In an embodiment, the movable distance may include an FTTI range indicating a movable distance during the FTTI and/or an FOTI range indicating a movable distance during the FOTI.

In an embodiment, the processor may compare the FOTI and the FTTI, determine a minimal risk maneuver strategy in consideration of only the FTTI, when the FOTI is greater than or equal to the FTTI, and determine the minimal risk maneuver strategy in consideration of both the FOTI and the FTTI, when the FOTI is less than the FTTI. The minimal risk maneuver strategy may include a minimal risk maneuver type and/or a stop location.

In an embodiment, the processor may select a first minimal risk maneuver type having a highest priority among the minimal risk maneuver types, which are performable within the FTTI, when the FOTI is greater than or equal to the FTTI, and control the controller such that the vehicle is stopped according to the first selected minimal risk maneuver type.

In an embodiment, the processor may select a first minimal risk maneuver type having a highest priority among the minimal risk maneuver types which are performable within the FTTI, when the FOTI is less than the FTTI, may determine, when the FOTI elapses, whether the function in which the failure has occurred is normally at least temporarily operated by the safety algorithm which is performed during the FOTI, check, when the function in which the failure has occurred is normally at least temporarily operated, whether at least one other minimal risk maneuver type having a higher priority than that of the first selected minimal risk maneuver type is performable within the FTTI, select, when the at least one other minimal risk maneuver type having a higher priority than that of the first selected minimal risk maneuver type is performable, a second minimal risk maneuver type having the highest priority among the at least one other minimal risk maneuver type, and control the controller such that the vehicle is stopped according to the second selected minimal risk maneuver type.

In an embodiment, the processor may further consider the vehicle state information and the surrounding environment information, in order to determine the minimal risk maneuver type.

The minimal risk maneuver type may include a straight stop type, an in-lane stop type, a half-shoulder stop type, a full-shoulder stop type, or any combination thereof.

In an embodiment, the processor may determine a minimal risk maneuver strategy based on the movable time and/or the movable distance, and may control according to the determined minimal risk maneuver strategy such that the vehicle is emergency stopped.

Another embodiment is an operation method of an autonomous vehicle. The operation method may include obtaining surrounding environment information and vehicle state information of the vehicle during autonomous driving of the vehicle. The operation method may further include detecting whether a failure occurs in a function required for the autonomous driving of the vehicle based on the vehicle state information. The operation method may further include determining a movable time and/or a movable distance, which indicate a fail-operational capability (FOC) of the vehicle, based on the vehicle state information and/or the surrounding environment information. And, the operation method may further include performing an emergency stop by performing a minimal risk maneuver based on the movable time and/or the movable distance.

### BRIEF DESCRIPTION OF THE DRAWINGS

Various embodiments are described with reference to the drawings in which:
FIG. 1 is a block diagram of a vehicle according to various embodiments of the present disclosure;
FIG. 2 is a functional block diagram of a processor according to various embodiments of the present disclosure;
FIGS. 3A to 3C show that a fail-operational capability (FOC) according to various embodiments of the present disclosure may be defined by time;
FIG. 4 shows minimal risk maneuver (MRM) types for each vehicle state according to various embodiments of the present disclosure;
FIG. 5 shows an example where a safety mechanism of a vehicle is not operated during a fault tolerant time interval (FTTI) in accordance with various embodiments of the present disclosure;
FIGS. 6A and 6B show examples of a range in which the vehicle may travel during the FTTI and a fail operational time interval (FOTI) according to various embodiments of the present disclosure;
FIG. 7 is a flowchart showing operations of the vehicle according to various embodiments of the present disclosure;
FIG. 8 is a flowchart showing that an MRM strategy is determined based on a type of a fault that has occurred in the vehicle according to various embodiments of the present disclosure;
FIG. 9 is a flowchart showing that an MRM type is selected based on the FTTI and FOTI in the vehicle according to various embodiments of the present disclosure;
FIGS. 10A and 10B show examples of selecting the MRM type based on the FTTI and FOTI in the vehicle according to various embodiments of the present disclosure; and
FIGS. 11A and 11B show examples of selecting the MRM type based on the FTTI and FOTI in the vehicle according to various embodiments of the present disclosure.

### DETAILED DESCRIPTION OF ILLUSTRATIVE EMBODIMENTS

Embodiments of the present disclosure will be described in detail with reference to the accompanying drawings.

The configuration of embodiments of the present disclosure and details of the consequent effect may be more clearly understood by the following detailed description. Same components of various embodiments are denoted by the same reference numerals as much as possible even though they are depicted in different drawings. It should be noted that the detailed description may be omitted when the known configurations may make the subject matter of the present disclosure unclear.

Prior to the detailed description of the present disclosure, terms used in the present disclosure may be defined as follows.

A vehicle may be equipped with an autonomous driving system (ADS) and thus may be autonomously driven. For example, the vehicle may perform steering, acceleration, deceleration, lane change, stopping without a driver's manipulation by the ADS, or any combination thereof. The ADS may include, for example, pedestrian detection and collision mitigation system (PDCMS), lane change decision aid system (LCAS), land departure warning system (LDWS), adaptive cruise control (ACC), lane keeping assistance system (LKAS), road boundary departure prevention system (RBDPS), curve speed warning system (CSWS), forward vehicle collision warning system (FVCWS), low speed following (LSF), or any combination thereof.

A driver may be a person who uses a vehicle and is provided with a service of an autonomous driving system.

A vehicle control authority may control at least one component of the vehicle and/or at least one function of the vehicle. The at least one function of the vehicle may include, for example, a steering function, an acceleration function, a deceleration function (or a braking function), a lane change function, a lane detection function, a lateral control function, an obstacle recognition and distance detection function, a powertrain control function, a safety zone detection function, an engine on/off function, a power on/off function, a vehicle lock/unlock function, or any combination thereof. The listed functions of the vehicle are only examples for understanding, and embodiments of the present disclosure are not necessarily limited thereto.

A shoulder may be a space between the outermost road boundary (the outermost lane boundary) in a traveling direction of the vehicle and a road edge (e.g., kerb, guardrail).

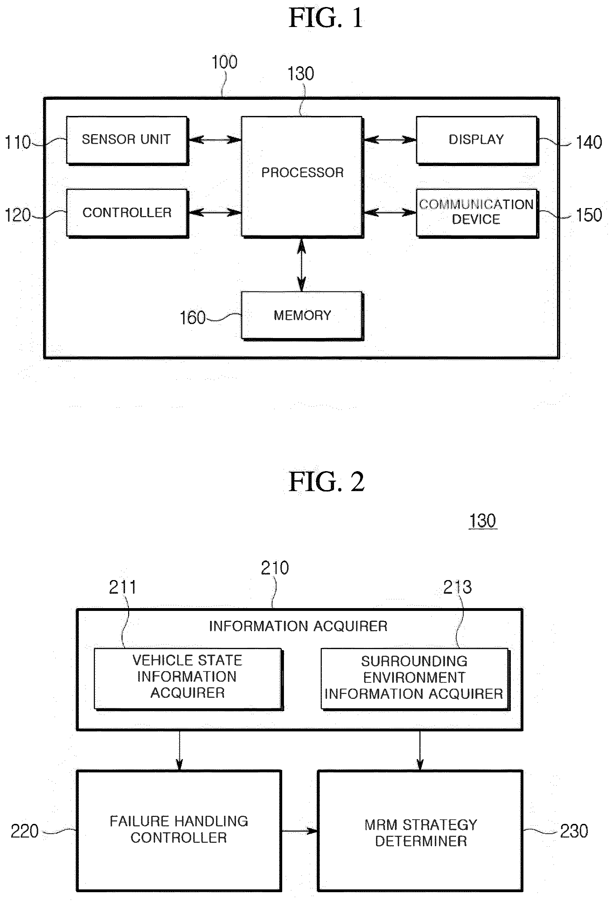

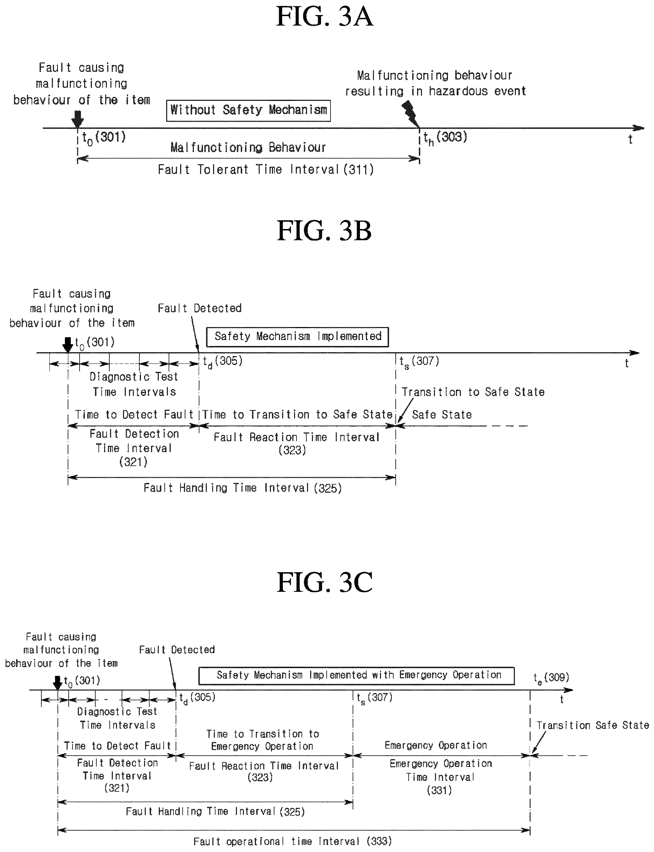

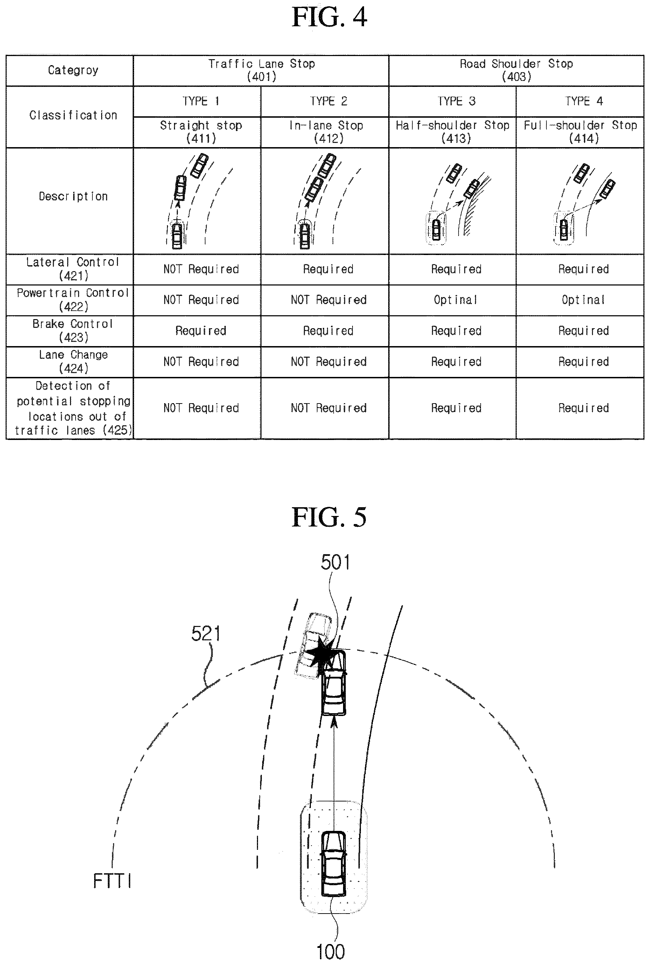

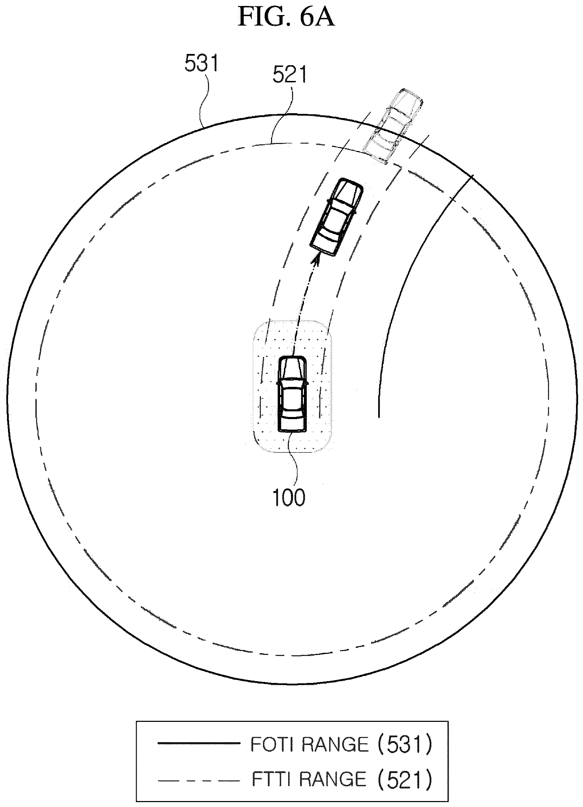

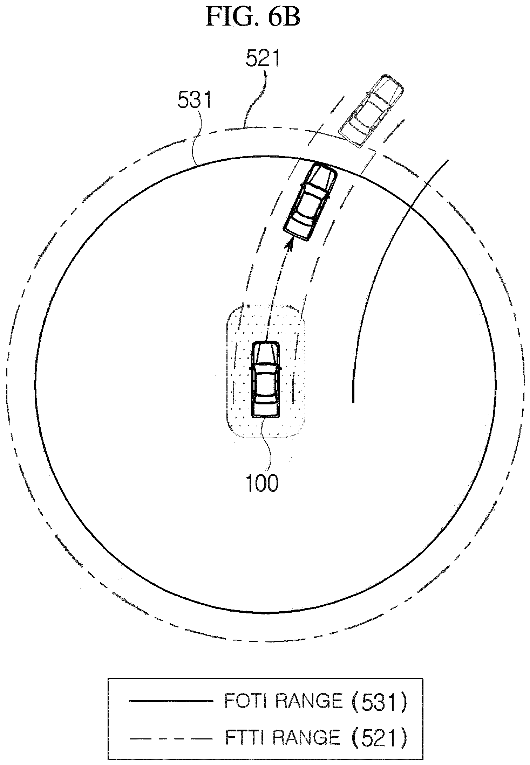

FIG. 1 is a block diagram of a vehicle according to various embodiments of the present disclosure. A vehicle shown in Fig. 1 is shown as an embodiment. Each component of the electronic device may be configured with one chip, one part, or one electronic circuit or configured by combining chips, parts, and/or electronic circuits. According to an embodiment, some of the components shown in Fig. 1 may be divided into a plurality of components and may be configured with different chips, parts or electronic circuits. Also, some components may be combined and configured with one chip, one part, or one electronic circuit. According to an embodiment, some of the components shown in Fig. 1 may be omitted or components not shown may be added. At least some of the components of FIG. 1 will be described with reference to FIGS. 2, 3A, 3B, 3C, 4, 5, 6A, and 6B. FIG. 2 is a functional block diagram of a processor according to various embodiments of the present disclosure. FIGS. 3A to 3C show that a fail-operational capability (FOC) according to various embodiments of the present disclosure may be defined by time. FIG. 4 shows minimal risk maneuver (MRM) types for each vehicle state according to various embodiments of the present disclosure. FIG. 5 shows an example where a safety mechanism of a vehicle is not operated during a fault tolerant time interval (FTTI) in accordance with various embodiments of the present disclosure. FIGS 6A and 6B show examples of a range in which the vehicle may travel during the FTTI and a fail operational time interval (FOTI) according to various embodiments of the present disclosure.

Referring to FIG. 1, a vehicle 100 may include a sensor unit 110, a controller 120, a processor 130, a display 140, a communication device 150, and a memory 160.

According to various embodiments, the sensor unit 110 may detect the surrounding environment of the vehicle 100 by using at least one sensor and may generate sensing data related to the surrounding environment based on the detection result. According to an embodiment, based on the sensing data obtained from at least one sensor, the sensor unit 110 may provide road information, information on objects around the vehicle (e.g., other vehicles, people, objects, curbs, guardrails, lanes, obstacles), vehicle location information, or any combination thereof. The road information may include, for example, lane location, lane shape, lane color, lane type, the number of lanes, the presence or absence of a shoulder, the size of the shoulder, or any combination thereof. The object around the vehicle may include, for example, a position of the object, a size of the object, a shape of the object, a distance to the object, a relative speed to the object, or any combination thereof.

According to an embodiment, the sensor unit 110 may include a camera, a light detection and ranging (LIDAR), a radio detection and ranging (RADAR), an ultrasonic sensor, an infrared sensor, a position measuring sensor, a pressure sensor, or any combination thereof. The listed sensors are only examples for understanding, and the sensors included in the sensor unit 110 of an embodiment of the present disclosure are not necessarily limited thereto. The camera may capture the surroundings of the vehicle and may generate image data including lanes and/or surrounding objects at the front, rear, and/or side of the vehicle 100. For example, the sensor unit 110 may include a vision sensor that determines the shape and/or size of a lane by using a camera. The LIDAR may generate information on the objects located at the front, rear, and/or side of the vehicle 100 by using light (or laser). The RADAR may generate information on the objects located at the front, rear, and/or side of the vehicle 100 by using electromagnetic waves (or radio waves). The ultrasonic sensor may generate information on the objects located at the front, rear, and/or side of the vehicle 100 by using ultrasonic waves. The infrared sensor may generate information on the object located at the front, rear, and/or side of the vehicle 100 by using infrared light. The position measuring sensor may measure the current position of the vehicle 100. The position measuring sensor may include a global positioning system (GPS) sensor, a differential global positioning system (DGPS) sensor, a global navigation satellite system (GNSS) sensor, or any combination thereof. The position measuring sensor may generate vehicle position data based on a signal generated by the GPS sensor, the DGPS sensor, the GNSS sensor, or any combination thereof. The pressure sensor may monitor pressures of internal components of the vehicle and may generate vehicle state information that indicates whether mechanical faults and/or electrical faults of the internal components of the vehicle occur.

According to various embodiments, the controller 120 may control the operations of at least one component of the vehicle 100 and/or of at least one function of the vehicle under the control of the processor 130. The at least one function may include, for example, a steering function, an acceleration function (or a longitudinal acceleration function), a deceleration function (or a longitudinal deceleration function, a brake function), a lane change function, a lane detection function, an obstacle recognition and distance detection function, a lateral control function, a powertrain control function, a safety zone detection function, an engine on/off function, a power on/off function, a vehicle lock/unlock function, or any combination thereof.

According to an embodiment, the controller 120 may control the operation of at least one function of the vehicle and/or at least one component of the vehicle for the purpose of autonomous driving and/or minimal risk maneuver (MRM) of the vehicle 100 under the control of the processor 130. For example, the controller 120 may control the operation of the steering function, the acceleration function, the deceleration function, the lane change function, the lane detection function, the lateral control function, the obstacle recognition and distance detection function, the powertrain control function, the safety zone detection function, or any combination thereof.

According to various embodiments, the processor 130 may control overall operation of the vehicle 100. According to various embodiments, the processor 130 may include an electrical control unit (ECU) capable of integrally controlling components within the vehicle 100 and/or an ADS processor that controls the ADS. For example, the processor 130 may include a central processing unit (CPU) or a micro processing unit (MCU), which is capable of performing calculation processing.

According to various embodiments, when a specified event occurs, the processor 130 may control the components within the vehicle 100 such that the vehicle performs autonomous driving by activating the ADS. The specified event may occur when autonomous driving of the driver is required/activated, a vehicle control authority is delegated from the driver, or a condition specified by the driver and/or a designer is satisfied.

According to various embodiments, the processor 130 may determine whether normal autonomous driving is possible, based on vehicle state information and/or surrounding environment information during the autonomous driving. When a failure in which normal autonomous driving impossible occurs, the processor 130 may determine an MRM strategy and may control the determined MRM strategy to be performed. The MRM strategy may include an MRM type and/or a stop location. According to an embodiment, based on the vehicle state information, the processor 130 may detect that a failure has occurred due to a fault related to at least one component included in the vehicle and may perform fail-operational processing. Simultaneously with this, the processor 130 may determine the MRM strategy based on a fail-operational capability (FOC) according to a fault type. The FOC may be a limit to which a vehicle may tolerate the fault.

According to various embodiments, the processor 130 may include, as shown in FIG. 2, an information acquirer 210, a failure handling controller 220, and an MRM strategy determiner 230.

The information acquirer 210 may include a vehicle state information acquirer 211 and a surrounding environment information acquirer 213 to obtain the surrounding environment information and vehicle state information during the autonomous driving of the vehicle. The vehicle state information acquirer 211 may monitor the mechanical and/or electrical states of the components (e.g., a sensor, an ADS processor, an actuator, etc.) within the vehicle from a point of time when the ADS is activated, and may obtain the vehicle state information that indicates whether the mechanical faults and/or electrical faults of the internal components of the vehicle occur. The vehicle state information may include information on the mechanical and/or electrical states of the components within the vehicle. For example, the vehicle state information may include information indicating whether or not functions required for the autonomous driving are normally operable according to mechanical and/or electrical states of the internal components of the vehicle.

The surrounding environment information acquirer 213 may obtain the environment information on the surroundings of the vehicle by using the sensor unit 110 and/or the communication device 150 from the point of time when the ADS is activated. The environment information on the surroundings of the vehicle may obtain information on a road on which the vehicle travels and/or information on objects around the vehicle. According to various embodiments, the surrounding environment information acquirer 213 may obtain map information through the communication device 150 from an external device (e.g., another vehicle or server) and may obtain the information on the road on which the vehicle is traveling, from the map information. According to various embodiments, the surrounding environment information acquirer 213 may obtain information on objects (e.g., other vehicles, people, objects, kerbs, guardrails, lanes, obstacles) around the vehicle through the sensor unit 110. For example, the surrounding environment information acquirer 213 may obtain a distance and a relative speed to at least one vehicle located at the front, side, and/or rear of the vehicle.

The failure handling controller 220 may check whether a failure occurs in at least one component required for the autonomous driving of the vehicle, based on the vehicle state information. For example, based on the vehicle state information, the failure handling controller 220 may detect that a failure has occurred due to the mechanical and/or electrical faults of the component such as a sensor, an actuator, and/or an ADS processor. When a failure occurs, the failure handling controller 220 may perform the fail-operational processing and may determine, based on the fault type of the failure, a time indicating the fail-operational capability (FOC), that is, a FOC time. The FOC may indicate a limit to which a vehicle may tolerate the failure.

According to an embodiment, the FOC time may include a fault tolerant time interval (FTTI) and/or a fail operational time interval (FOTI). As shown in FIG. 3A, the FTTI 311 may indicate a time interval from a fault occurrence time point tₒ 301 to a time point tₕ 303 when a hazardous event (e.g., collision) is predicted to occur. The time point when a hazardous event is predicted to occur may be predicted in consideration of the surrounding environment information. FOTI may include a fault handling time interval (FHTI) and an emergency operation time interval (EOTI). First, as shown in FIG. 3B, the FHTI 325 may be determined as a time interval obtained by adding a fault detection time interval (FDTI) 321, that is a time interval from the fault occurrence time point tₒ 301 to a fault detection time point t_{d} 305, and a fault reaction time interval (FRTI) 323, that is a time interval from the fault detection time point t_{d} 305 to a time point tₛ 307 when the vehicle is switched to a safe state through a failure handling function. The safe state may include a state in which faults are removed by the failure handling function and thus a corresponding function operates normally. In addition, as shown in FIG. 3C, the FOTI 333 may be determined as a time interval obtained by adding the FHTI 325 to the EOTI 331, that is a time interval from the time point tₛ 307 when the FRTI 323 is completed to a time point tₑ 309 when the vehicle is switched to the safe state by performing an emergency operation. The emergency operation may be performed in order to obtain a temporary safe state when the vehicle fails to enter the safe state even though the failure handling function is performed during the FHTI 325 in the vehicle. The temporary safe state may include a state in which a function that is faulty due to the emergency operation temporarily operates again. According to an embodiment, the EOTI 331 may be set equal to or less than a time interval allowed for the emergency operation. The time interval allowed for the emergency operation may be set to a time interval in which the emergency operation may be maintained without risk of an unreasonable level.

As described above, the FOC time may be determined based on safety relevant time intervals defined in ISO-26262, for example.

According to an embodiment, the failure handling controller 220 may determine the FOC time according to the fault type, by using a FOC time index table shown in Table 1 below. The fault type may include a fault of the component required for the autonomous driving system to work and/or a fault that may occur at a system level.

Table 1 below shows an FOC time index table for each fault type according to various embodiments of the present disclosure.

**Table 1**

| Fault type | | FTTI | FOTI |
|---|---|---|---|
| Sensor | Fault type s1 | FTTI_s1 | FOTI_s1 |
| | Fault type s2 | FTTI_s2 | FOTI_s2 |
| | ··· | ··· | ··· |
| | Fault type sN | FTTI_sN | FOTI_sN |
| ADS processor | Fault type p1 | FTTI_p1 | FOTI_p1 |
| | Fault type p2 | FTTI_p2 | FOTI_p2 |
| | ··· | ··· | ··· |
| | Fault type pM | FTTI_p1 | FOTI_p1 |
| Actuator | Fault type a1 | FTTI_a1 | FOTI_a1 |
| | ··· | ··· | ··· |
| | Fault type aL | FTTI_aL | FOTI_aL |

Table 1 shows exemplarily predetermined/selected FTTI and FOTI for each fault type. For example, the FTTI and FOTI for each fault type may be predetermined/selected by a business operator, a designer, and/or a developer related to a safety algorithm for handling a failure. As shown in Table 1, the fault type may be classified by the component or system level. For example, a first mechanical fault of a vision sensor may be classified as a sensor fault type s1, and the FTTI, and FOIT for the fault type may be set in advance to FTTI_s1 and FOTI_s1. As another example, a first functional fault of the vision sensor may be classified as a sensor fault type s2, and the FTTI and FOIT for the fault type may be set in advance to FTTI_s2 and FOTI_s2. That is, the failure handling controller 220 may determine the FTTI and FOTI according to the fault type by using the FOC time index table shown in Table 1.

In a situation where the MRM needs to be performed, the MRM strategy determiner 230 may select one MRM type from among a plurality of MRM types. For example, when the failure handling controller 220 detects a failure of at least one component required for the autonomous driving of the vehicle, the MRM strategy determiner 230 may determine that it is necessary to perform the MRM and may select the MRM type. According to an embodiment, the MRM strategy determiner 230 may determine the MRM strategy for reaching a minimum risk condition (MRC) through the association of the FOC time by the failure handling controller 220 and a region of interest (ROI) for the MRM strategy. For the determination of the MRM strategy, the MRM strategy determiner 230 may further consider the vehicle state information and/or surrounding environment information.

The MRM types may include stop types shown in FIG. 4. For example, the MRM types may include a traffic lane stop 401 type including TYPE 1 and TYPE 2, and may include a road shoulder stop 403 type including TYPE 3 and TYPE 4.

The traffic lane stop 401 type may include a straight stop 411 of the TYPE 1 and an in-lane stop 412 of the TYPE 2. The road shoulder stop 403 type may include a half-shoulder stop 413 of the TYPE 3 and a full-shoulder stop 414 of the TYPE 4.

The straight stop 411 of the TYPE 1 may be a type in which the vehicle is stopped by using only brake control 423 that is a longitudinal deceleration function. The straight stop 411 of this example does not involve lateral control. For example, the straight stop 411 may be performed in a situation where lateral control 421, powertrain control 422, lane change 424, detection of potential stopping location out of traffic lane 425, or any combination thereof, is impossible. For example, the straight stop may be performed in a situation where the lateral control is impossible due to the fault in an actuator and the lane detection is impossible. The detection of potential stopping location out of traffic lane may be a function of detecting the position of a safety zone located outside the traffic lane, such as a shoulder or a rest stop.

The in-lane stop 412 of the TYPE 2 may be a type in which the vehicle stops within the boundary of the lane in which the vehicle is traveling. For example, the in-lane stop 412 may refer to a type in which the vehicle stops within the boundary of the lane in which the vehicle is traveling through the lateral control 421 and/or the brake control 423. The lane in which the vehicle is traveling may refer to a lane in which the vehicle is traveling at a point of time when the minimum risk maneuver is determined to be necessary. For example, the in-lane stop 412 may be performed in a situation in which the powertrain control 422, the lane change 424, the detection of potential stopping location out of traffic lane 425, or any combination thereof, is impossible.

The half-shoulder stop 413 of the TYPE 3 may be a type in which the vehicle stops in a state where a part of the vehicle is positioned on the shoulder of the road. For example, the half-shoulder stop 413 may refer to a type in which the vehicle moves such that a part of the vehicle is positioned on the shoulder out of the road boundary (or out of the outermost lane boundary) through the lateral control 421, the brake control 423, the lane change 424, and/or the detection of potential stopping location out of traffic lane 425 and then the vehicle stops.

The full-shoulder stop 414 of the TYPE 4 may be a type in which the vehicle stops in a state where the entire vehicle is positioned on the shoulder of the road. For example, the full-shoulder stop 414 may refer to a type in which the vehicle moves such that the entire vehicle is positioned on the shoulder out of the road boundary (or out of the outermost lane boundary) through the lateral control 421, the brake control 423, the lane change 424, and/or the detection of potential stopping location out of traffic lane 425 and then the vehicle stops.

According to an embodiment, the MRM types of FIG. 4 may have priority. The priority of the MRM types may be set in consideration of the risk of collision with surrounding objects when the vehicle stops. For example, since a possibility that the vehicle which stops on the shoulder collides with surrounding objects is less than a possibility that the vehicle which stops within the traffic lane collides with surrounding objects, the priority of the MRM types corresponding to the road shoulder stop 403 type may be set higher than the priority of the MRM types corresponding to the traffic lane stop 401 type. In addition, because a possibility that the vehicle which stops such that the entire vehicle is positioned on the shoulder of the road collides with surrounding objects is less than a possibility that the vehicle which stops such that only a part of the vehicle is positioned on the shoulder of the road collides with surrounding objects, the priority of the MRM types corresponding to the full-shoulder stop 414 may be set higher than the priority of the MRM types corresponding to the half-shoulder stop 413. Also, because a possibility that the vehicle which stops while maintaining the traveling lane collides with surrounding objects is less than a possibility that the vehicle which stops regardless of the traveling lane collides with surrounding objects, the priority of the MRM types corresponding to the in-lane stop 412 may be set higher than the priority of the MRM types corresponding to the straight stop 411. That is, the priority of the MRM types may be set to be reduced in the order of the full-shoulder stop 414, the half-shoulder stop 413, the in-lane stop 412, and the straight stop 411.

According to an embodiment, the MRM strategy determiner 230 may select an MRM type having the highest priority among the MRM types that may be performed (or deployed) within a specified minimum risk condition (MRC) range. According to an embodiment, the MRC range may be set and/or changed by business operators and/or designers. According to an embodiment, the specified MRC range may be set differently according to the performance of the vehicle, the type of the vehicle, and/or external environmental factors (e.g., weather, time, etc.). According to an embodiment, the MRC range may be set to a range in which the vehicle may move during the FTTI. For example, the MRC range may be the FTTI range. According to an embodiment, the MRC range is separate and different from the FTTI range, and may be greater or smaller than the FTTI range.

According to an embodiment, the MRM strategy determiner 230 may identify and/or determine functions that normally operate among functions required for the autonomous driving of the vehicle 100, functions that maynot normally operate among the functions required for the autonomous driving, and/or the MRM types that may be performed within the MRC range based on the road information within the MRC range. For example, when the lateral control function among the functions required for the autonomous driving does not normally operate, the MRM strategy determiner 230 may determine that only the straight stop of the TYPE 1 may be performed within the FTTI range. As another example, when the lateral control function among the functions required for the autonomous driving normally operate but a shoulder does not exist within the FTTI range, the MRM strategy determiner 230 may determine that the straight stop of the TYPE 1 and the in-lane stop of the TYPE 2 may be performed within the FTTI range. As further another example, when the lateral control function among the functions required for the autonomous driving normally operate and there exists a shoulder having a width greater than a specified size within the FTTI range, the MRM strategy determiner 230 may determine that the straight stop of the TYPE 1, the in-lane stop of the TYPE 2, the half-shoulder stop of the TYPE 3, and the full-shoulder stop of the TYPE 4 may all be performed.

According to an embodiment, the MRM strategy determiner 230 may select and/or determine the MRM type to be deployed to satisfy the MRC from among the MRM types that may be performed within the MRC range, based on the FTTI and FOTI determined by the failure handling controller 220. That is, the MRM strategy determiner 230 may determine the MRM strategy based on the FTTI range and/or the FOTI range. The FTTI range may indicate a movable distance during the FTTI. That is, the FTTI range may indicate a distance range in which the vehicle may move during the FTTI in a state where a safety mechanism of the vehicle does not operate. The FOTI range may indicate a movable distance during the FOTI. That is, the FOTI range may include a distance range in which the vehicle may move during the FHTI in a situation where the fail-operational capability may operate normally, and/or a distance range in which the vehicle may move during the EOTI that is a time interval in which an emergency operation is performed. According to an embodiment, the MRM strategy determiner 230 may also determine a stop location of the vehicle 100, based on the FTTI and FOTI determined by the failure handling controller 220.

According to an embodiment, the MRM strategy determiner 230 may determine the MRM type and/or the stop location that may be performed within the FTTI range. This is because a hazardous event of the vehicle 100 may occur if the vehicle 100 is not emergency stopped within the FTTI range in accordance with the MRM. For example, the following description will be provided with reference to FIG. 5 by assuming that a fault occurs in the vision sensor provided in the vehicle 100. If the safety mechanism does not operate despite the fact that a fault occurs in the vision sensor, the vehicle 100 maynot recognize the lane, so that the vehicle may collide 501 with another vehicle at the boundary of the FTTI range 521. Accordingly, in order that the vehicle 100 is stopped within the FTTI range, the MRM strategy determiner 230 may control such that one of the MRM types that may be performed within the FTTI range is selected and deployed. Because there is no shoulder within the FTTI range 521 of FIG. 5, the MRM strategy determiner 230 may select the straight stop of the TYPE 1 or the in-lane stop of the TYPE 2.

According to an embodiment, the MRM strategy determiner 230 may compare the FTTI range and the FOTI range and may determine the MRM strategy in consideration of only the FTTI range or both the FTTI range and the FOTI range in accordance with a result of the comparison.

If the FTTI range is smaller than the FOTI range, the MRM strategy determiner 230 may determine the MRM strategy in consideration of only the FTTI range. For example, as shown in FIG. 6A, when the FTTI range 521 is smaller than the FOTI range 531, the MRM strategy determiner 230 may select the MRM type in consideration of only the FTTI range 521. This is because a point of time when the vehicle 100 is switched to the safe state by that that the fault that has occurred in the vehicle 100 is at least temporarily removed is later than a point of time when a hazardous event occurs in the vehicle 100. Accordingly, the MRM strategy determiner 230 may select the MRM type in consideration of only the FTTI range 521 and may control the vehicle 100 such that the selected MRM type is deployed.

If the FTTI range is greater than the FOTI range, the MRM strategy determiner 230 may determine the MRM strategy in consideration of both the FOTI range and the FTTI range. For example, as shown in FIG. 6B, when the FTTI range 521 is greater than the FOTI range 531, the vehicle 100 may select the MRM type in consideration of both the FOTI range 531 and the FTTI range 521. This is because the point of time when the vehicle 100 is switched to the safe state by that that the fault that has occurred in the vehicle 100 is at least temporarily removed is earlier than the point of time when a hazardous event occurs in the vehicle 100.That is, before the time point of the occurrence of the hazardous event, when the fault of the vehicle 100 is at least temporarily removed by an emergency operation and/or the failure handling function during the FOTI, the function in which the failure has occurred may operate normally near the boundary at least temporarily. In this case, the MRM types that may be performed by the vehicle 100 in the FOTI range 531 may be changed. Accordingly, the MRM strategy determiner 230 may select and/or change the MRM type in consideration of both the FTTI range 521 and the FOTI range 531 and may control the vehicle 100 such that the selected and/or changed MRM type is deployed.

For example, when a fault occurs, the MRM strategy determiner 230 may identify the MRM types that may be performed within the FTTI range and may select and deploy a first MRM type having the highest priority among the identified MRM types. Here, the failure handling function and/or emergency operation may be performed by the failure handling controller 220. Accordingly, when the vehicle 100 is near the FOTI range boundary, the vehicle may be switched to the safe state by at least temporarily removing the fault that has occurred in the vehicle 100. When the vehicle 100 is in the safe state, the MRM strategy determiner 230 may reidentify the MRM types that may be performed within the FTTI range. When there is a second MRM type having a higher priority than that of the first MRM type which is being deployed among the reidentified MRM types that may be performed, the MRM strategy determiner 230 may control such that the MRM type for the MRC is changed from the first MRM type to the second MRM type and the changed second MRM type is performed.

According to an embodiment, when the MRM type is selected, the MRM strategy determiner 230 may store, in the memory 160, supporting data on which of the MRM type is selected. The supporting data may include, for example, failure information, the fault type of the failure, the FTTI range, the FOTI range, road information within the FTTI range (e.g., presence or absence of a shoulder, size of a shoulder), surrounding object information, the vehicle state information, lane detection information, or any combination thereof. The listed information is only an example for understanding, and the supporting data of an embodiment of the present disclosure is not necessarily limited to the listed information.

According to various embodiments, the processor 130 may perform a control operation for stopping the vehicle in accordance with the determined and/or selected MRM, and may determine whether the MRC is satisfied. The MRC may be a stationary state where the speed of the vehicle is zero. For example, the processor 130 may determine whether the vehicle 100 enters a stationary state in which the speed of the vehicle 100 is zero while the vehicle 100 performs at least one operation according to the determined final MRM type. The processor 130 may determine that the MRC is satisfied when the speed of the vehicle 100 is zero.

According to various embodiments, when the MRC is satisfied, the processor 130 may terminate the performing operation of the MRM and may switch the autonomous driving system (ADS) to a standby mode or an off state. According to an embodiment, after switching the autonomous driving system (ADS) to a standby mode or an off state, the processor 130 may control such that the vehicle control authority is transferred to the driver (or user).

According to various embodiments, the display 140 may visually display information related to the vehicle 100. For example, the display 140 may provide a variety of information related to the state of the vehicle 100 to the driver of the vehicle 100 under the control of the processor 130. The variety of information related to the state of the vehicle may include at least one of information indicating whether various components included in the vehicle and/or at least one function of the vehicle normally operate, and information indicating the driving state of the vehicle. The driving state of the vehicle may include, for example, a state in which the vehicle is being autonomously driven, a state in which the vehicle is performing the MRM, a state in which the MRM has been completed, a state in which the autonomous driving has been ended, or any combination thereof.

According to various embodiments, the communication device 150 may communicate with an external device of the vehicle 100. According to embodiments, the communication device 150 may receive data from the outside of the vehicle 100 or may transmit data to the outside of the vehicle 100 under the control of the processor 130. For example, the communication device 150 may perform communication by using a wireless communication protocol and/or a wired communication protocol.

Although the controller 120 and the processor 130 have been described as separate components in FIG. 1 described above, the controller 120 and the processor 130 may be integrated into one component according to various embodiments.

In FIG. 1 described above, although the information acquirer 210 has been described as being included in the processor 130, the information acquirer 210 may be included in the sensor unit 110. For example, the information acquirer 210 may be included in the sensor unit 110 and may obtain the vehicle state information and the surrounding object information by using at least one sensor of the sensor unit 110. The information acquirer 210 may provide the obtained vehicle state information and surrounding object information to the processor 130.

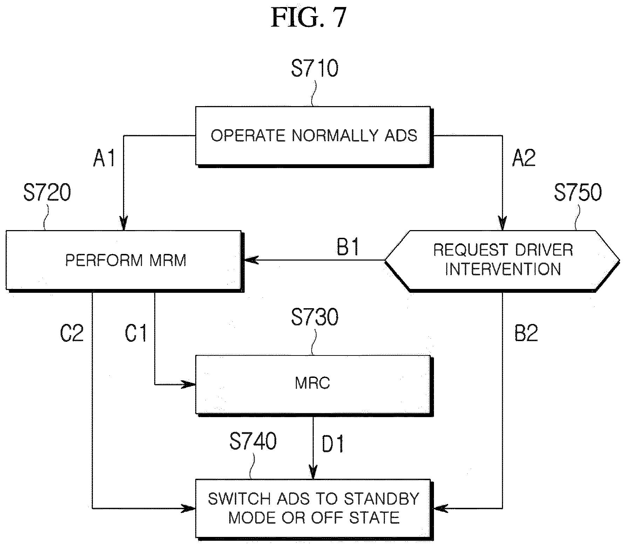

FIG. 7 is a flowchart showing operations of the vehicle according to various embodiments of the present disclosure. The vehicle of FIG. 7 may be the vehicle 100 of FIG. 1.

Referring to FIG. 7, in step S710, the vehicle 100 may normally operate the ADS.

According to an embodiment, the vehicle 100 may monitor the vehicle state and the surrounding environment while performing the autonomous driving according to the normal operation of the ADS. The vehicle 100 may detect whether the minimum risk maneuver (MRM) is required, based on information obtained by monitoring the vehicle state and the surrounding environment. If the minimum risk maneuver (MRM) is required, an event A1 may occur.

According to an embodiment, the vehicle 100 may detect whether the intervention of the driver (or user) is required, while performing the autonomous driving in accordance with the normal operation of the ADS. If the intervention of the driver is required, the vehicle 100 may perform a request to intervene (RTI) of the driver through the ADS or may issue a warning. The RTI of the driver or the warning may be an event A2. When the event A1 occurs while the ADS is normally operating, the vehicle 100 may proceed to step S720.

When the event A2 occurs while the ADS is normally operating, the vehicle 100 may determine whether the intervention of the driver is detected within a specified time in step S750. When the intervention of the driver is not detected within the specified time, the vehicle 100 may determine that an event B1 has occurred. When the event B1 has occurred, the vehicle 100 may proceed to step S720. When the intervention of the driver is detected within a specified time, the vehicle 100 may determine that an event B2 has occurred. When the event B2 has occurred, the vehicle 100 may proceed to step S740.

The vehicle 100 may perform the minimum risk maneuver (MRM) in step S720. According to an embodiment, the vehicle 100 may determine the MRM type based on the vehicle state information, surrounding environment information, FOC time information, or any combination thereof. The surrounding environment information may include road information and information on surrounding vehicles. As shown in FIG. 4, the surrounding environment information may include the straight stop 411 of the TYPE 1, the in-lane stop 412 of the TYPE 2, the half-shoulder stop 413 of the TYPE 3, and/or the full-shoulder stop 414 of the TYPE 4. The vehicle 100 may control at least one component within the vehicle in order to stop according to the determined MRM type. According to an embodiment, the vehicle 100 may store, in the memory 160, the supporting data used for determining the MRM type.

The vehicle 100 may determine whether or not the minimum risk condition is satisfied by that the speed of the vehicle becomes zero by performing the minimum risk maneuver in step S720. When the minimum risk maneuver is satisfied, the vehicle 100 may determine that an event C1 has occurred and may proceed to step S730. The vehicle 100 may determine whether the intervention of the driver is detected during the performance of the minimum risk maneuver. When the intervention of the driver is detected, the vehicle 100 may determine that an event C2 has occurred and may proceed to step S740.

The vehicle 100 may maintain a state in which the minimum risk condition is satisfied in step S730. The state in which the minimum risk condition is satisfied may be a state in which the vehicle is stopped. For example, the vehicle 100 may maintain the stationary state of the vehicle. For example, the vehicle 100 may perform a control operation to maintain the vehicle to be in the stationary state regardless of the slope of the road surface at the stop location. The vehicle 100 may determine whether an event D1 occurs, while maintaining the state in which the minimum risk condition is satisfied. The event D1 may include ADS off by the driver and/or the completion of the transfer of the vehicle control authority to the driver. When the event D1 occurs, the vehicle 100 may proceed to step S740.

The vehicle 100 may switch the ADS to a standby mode or an off state in step S740. The vehicle 100 does not perform an operation for the autonomous driving while the ADS is in the standby mode or in the off state.

In steps S710, S720, S730, and S750 described above, the ADS may be in an active state, and in step S740 the ADS may be in an inactive state.

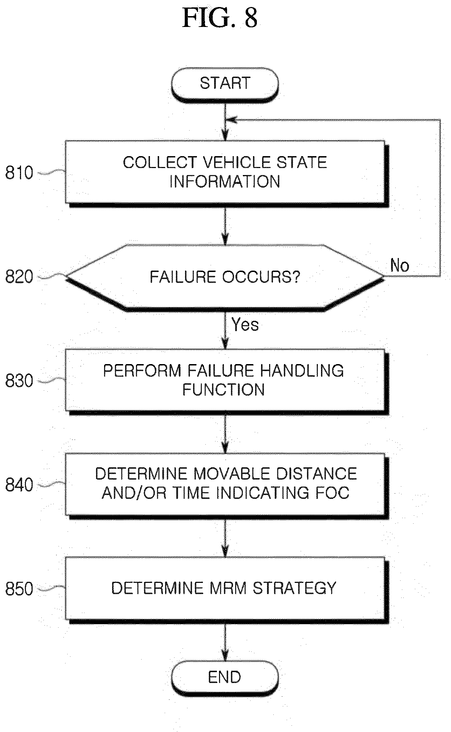

FIG. 8 is a flowchart showing that an MRM strategy may be determined based on the type of the fault that has occurred in the vehicle according to various embodiments of the present disclosure. Steps of FIG. 8 may be detailed steps of step S720 of FIG. 7. In the following embodiment, respective steps may be sequentially performed, and may not be necessarily performed sequentially. For example, the order of the respective steps may be changed, and at least two steps may be performed in parallel. In addition, the following steps may be performed by the processor 130 and/or the controller 120 included in the vehicle 100, or may be implemented with instructions that may be executed by the processor 130 and/or the controller 120.

Referring to FIG. 8, in step 810, the vehicle 100 may collect vehicle state information of the vehicle 100. For example, the vehicle 100 may periodically collect the vehicle state information including information on the mechanical state and/or electrical state of the internal components of the vehicle during the autonomous driving.

In step 820, the vehicle 100 may check whether a failure occurs in at least one component required for the autonomous driving based on the vehicle state information. For example, the vehicle 100 may determine whether a failure occurs due to mechanical or electrical faults of the component such as a sensor, an actuator, and/or the ADS processor, based on the vehicle state information.

When a failure does not occur in at least one component required for the autonomous driving, the vehicle 100 may return to step 810 and collect the vehicle state information.

When a failure occurs in at least one component required for the autonomous driving, the vehicle 100 may perform the failure handling function in step 830. The failure handling function may be for removing failures and may be designed in advance by a designer.

In step 840, the vehicle 100 may determine a movable distance and/or time indicating the fail-operational capability (FOC). For example, the vehicle 100 may determine a time during which the vehicle may tolerate the failure and/or a distance that the vehicle may travel while tolerating the failure, based on the type of the fault related to the failure. According to an embodiment, the time indicating the FOC may include the FTTI and/or FOTI. Also, the movable distance indicating the FOC may include the FTTI range and/or FOTI range. Here, the FTTI and/or FOTI indicating the FOC may be determined in the same manner as described in FIG. 1. For example, the FTTI and/or FOTI may be determined by using the fault type of the failure that has occurred, and the FOC time index table for each fault type.

In step 850, the vehicle 100 may determine the MRM strategy based on the movable distance and/or time indicating the FOC. According to an embodiment, the vehicle 100 may identify the MRM types that may be performed within the MRC range, based on the vehicle state information and/or surrounding environment information. The vehicle 100 may determine one MRM type among the MRM types that may be performed as the MRM type to be deployed for the MRC, based on the movable distance and/or time indicating the FOC. According to an embodiment, the vehicle 100 may determine the stopped position of the vehicle 100, based on the movable distance and/or time indicating the FOC.

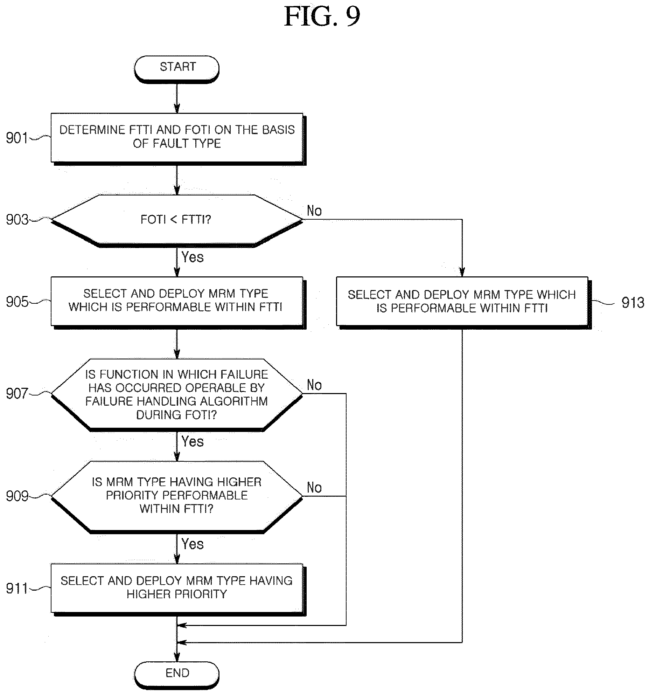

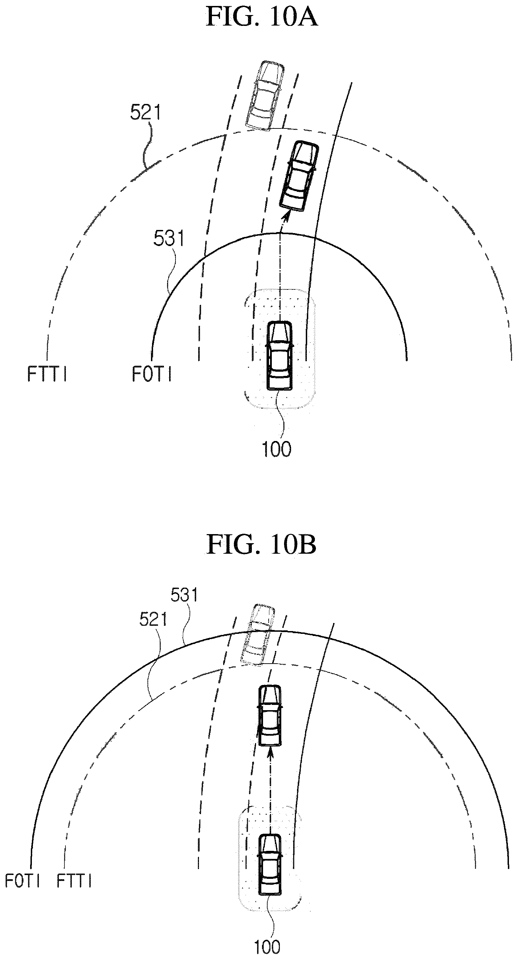

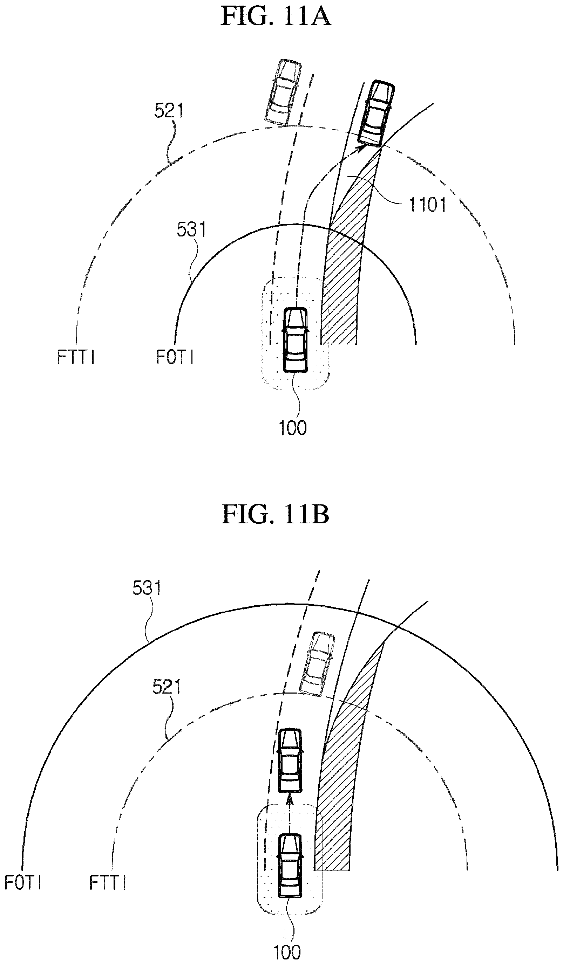

FIG. 9 is a flowchart showing that an MRM type is selected based on the FTTI and FOTI in the vehicle according to various embodiments of the present disclosure. Steps of FIG. 9 may be detailed steps of step S840 and/or step S850 of FIG. 8. Hereinafter, at least some steps of FIG. 9 will be described with reference to FIGS. 10A, 10B, 11A, and 11B. FIGS. 10A and 10B show examples of selecting the MRM type based on the FTTI and FOTI in the vehicle according to various embodiments of the present disclosure. FIGS. 11A and 11B show examples of selecting the MRM type based on the FTTI and FOTI in the vehicle according to various embodiments of the present disclosure.

Hereinafter, in the following embodiment of FIG. 9, respective steps may be sequentially performed, and may not be necessarily performed sequentially. For example, the order of the respective steps may be changed, and at least two steps may be performed in parallel. In addition, the following steps may be performed by the processor 130 and/or the controller 120 included in the vehicle 100, or may be implemented with instructions that may be executed by the processor 130 and/or the controller 120, for example.

Referring to FIG. 9, the vehicle 100 may determine the FTTI and FOTI based on the fault type in step 901. For example, from the FOC time index table for each fault type as shown in Table 1, the vehicle 100 may obtain the FTTI and FOTI corresponding to the fault type of a currently occurring failure and may determine the obtained FTTI and FOTI as the FTTI and FOTI of the currently occurring failure.

In step 903, the vehicle 100 may compare the FOTI and the FTTI and may determine whether the FOTI is less than the FTTI. According to an embodiment, the vehicle 100 may compare the FOTI range and the FTTI range and may determine whether the FOTI range is smaller than the FTTI range.

When the FOTI is less than the FTTI, the vehicle 100 may select and deploy in step 905 the MRM type that may be performed within the FTTI. For example, as shown in FIGS. 10A and 11A, when the FOTI range 531 is smaller than the FTTI range 521, the vehicle 100 may determine at least one MRM type that may be performed within the FTTI range. The vehicle 100 may identify the MRM types that may be performed within the FTTI range, based on the vehicle state information and/or the surrounding environment information. For example, the vehicle 100 may recognize that a failure in which lane recognition is impossible has occurred due to the fault of the vision sensor based on the vehicle state information, and may determine the straight stop of the TYPE 1 as the MRM type that may be performed within the FTTI range 521 shown in FIG. 10A. The vehicle 100 may stop according to the selected MRM type. As another example, the vehicle 100 recognizes that a failure in which the lateral control function does not normally operate has occurred based on the vehicle state information, and may determine the straight stop of the TYPE 1 as the MRM type that may be performed within the FTTI range 521 shown in FIG. 11A. The vehicle 100 may stop according to the selected MRM type.

In step 907, the vehicle 100 may determine whether or not the function in which the failure has occurred is at least temporarily operable by a safety algorithm for handling the failure during the FOTI. The safety algorithm for handling the failure may include a failure handling operation and/or the emergency operation. The failure handling operation may be performed from a point of time when the vehicle 100 detects the occurrence of the fault. When the failure is not removed despite performing the failure handling operation, the emergency operation may be performed in order to at least temporarily operate the function in which the failure has occurred. For example, when the lane recognition is impossible due to the fault of the vision sensor, the vehicle 100 may perform the failure handling operation and/or the emergency operation during the FOTI, and may determine at least temporarily whether the lane recognition is possible as a result of performing the failure handling operation and/or the emergency operation. According to an embodiment, the emergency operation for the failure in which the lane recognition is impossible may include obtaining lane information from a map obtained in advance or estimating current lane information based on past lane information.

When the function in which the failure has occurred is at least temporarily operable, the vehicle 100 may determine in step 909 whether the MRM type having a higher priority may be performed within the FTTI. For example, although the vehicle 100 selects and deploys the straight stop of the TYPE 1 due to the occurrence of the failure in which the lane recognition is impossible, when the lane recognition function is at least temporarily operable at a point of time when the vehicle deviates from the boundary of the FOTI range 531 as shown in FIG. 10A, the vehicle 100 may determine that the in-lane stop having a higher priority than that of the straight stop may be performed within the FFTI range 521. Here, the vehicle 100 may check that there is no shoulder within the FTTI range 521 based on the surrounding environment information, and may determine that the road shoulder stop types maynot be performed. As another example, although the vehicle 100 selects and deploys the straight stop of the TYPE 1 due to the occurrence of the failure in the lateral control function, when the lateral control function is at least temporarily operable at a point of time when the vehicle deviates from the boundary of the FOTI range 531 as shown in FIG. 11A, the vehicle 100 may determine that the in-lane stop, the half-shoulder stop, and the full-shoulder stop which have a higher priority than that of the straight stop may be performed within the FFTI range 521. Here, the vehicle 100 may obtain information on a shoulder 1101 existing within the FTTI range 521 based on the surrounding environment information, and may determine that the half-shoulder stop and the full-shoulder stop may be performed based on information on the size of the shoulder (e.g., the width of the shoulder and the length of the shoulder).

When the MRM type having a higher priority within the FTTI may be performed, the vehicle 100 may select and deploy in step 911 the MRM type having a higher priority. For example, as shown in FIG. 10A, the vehicle 100 may select the in-lane stop type having a higher priority than that of the straight stop type, at the boundary of the FOTI range 531, and may deploy the selected in-lane stop type. That is, in the vicinity of the boundary of the FOTI range 531, the vehicle 100 may change the MRM type from the straight stop type to the in-lane stop type. As another example, as shown in FIG. 11A, the vehicle 100 may select the full-shoulder stop type having the highest priority among performable MRM types having a higher priority than that of the straight stop type, at the boundary of the FOTI range 531, and may deploy the selected full-shoulder stop type. That is, in the vicinity of the boundary of the FOTI range 531, the vehicle 100 may change the MRM type from the straight stop type to the full-shoulder stop type.

When the MRM type having a higher priority within the FTTI maynot be performed, the vehicle 100 may complete a stop according to the MRM type selected in step 905 and then may end the step procedure of FIG. 9. For example, when there is no MRM type having a higher priority than that of the MRM type selected in step 905, the vehicle 100 may end the step procedure of FIG. 9. For example, even though the in-lane stop of the TYPE 2 is selected in step 905 due to the occurrence of the failure in which the lane change is impossible and the lane change is at least temporarily possible by the safety algorithm for handling the failure during the FOTI, the road shoulder stop type having a higher priority than that of the in-lane stop type maynot be performed when there is no shoulder within the FTTI range. In this case, the vehicle 100 may complete a stop according to the in-lane stop type and then may return to FIG. 7.

When the function in which the failure has occurred is not operable, the vehicle 100 may complete the stop according to the selected MRM type and then may end the steps procedure of FIG. 9. For example, although the in-lane stop of the TYPE 2 is selected in step 905 due to the occurrence of the failure in which the lane change is impossible and the safety algorithm for handling the failure during the FOTI is performed, when the lane change function maynot be normally performed, the vehicle 100 may complete the stop according to the in-lane stop type and then may return to FIG. 7.

If the FOTI is greater than or equal to the FTTI, in step 913, the vehicle 100 may select and deploy the MRM type that may be performed within the FTTI. For example, as shown in FIGS. 10B and 11B, when the FOTI range 531 is greater than the FTTI range 521, the vehicle 100 may determine at least one MRM type that may be performed within the FTTI range. The vehicle 100 may identify the MRM types that may be performed within the FTTI range, based on the vehicle state information and/or the surrounding environment information. For example, the vehicle 100 may recognize that the failure in which the lane recognition is impossible has occurred due to the fault of the vision sensor based on the vehicle state information, and may determine that the straight stop of the TYPE 1 may be performed within the FTTI range 521. The vehicle 100 may stop according to the selected MRM type and may end the steps procedure of FIG. 9. Because the FOTI range 531 is greater than the FTTI range 521, the failure is not removed until the vehicle 100 reaches the boundary of the FTTI range 521.

In one or more exemplary embodiments, the above-described functions may be implemented in hardware, software, firmware, or any combination thereof. If implemented in software, the functions may be stored on or transmitted as one or more instructions or codes on a computer-readable medium. The computer readable media may include both a computer storage medium and a communication medium including any medium that facilitates the transfer of a computer program from one place to another. The storage medium may be any available medium that may be accessed by a computer. By way of a non-limiting example, such a computer-readable medium may include RAM, ROM, EEPROM, CD-ROM or other optical disk storage, a magnetic disk storage, or other magnetic storage device, or may include any other medium that may be used to transfer or store a desired program code in the form of instructions or data structures and may be accessed by a computer. Also, any connection is appropriately referred to as a computer-readable medium. For example, if software is transmitted from a website, a server, or other remote sources by using a coaxial cable, an optical fiber cable, twisted pair cables, a digital subscriber line (DSL) or wireless technologies such as infrared ray, radio, and ultra-high frequency, the coaxial cable, optical fiber cable, twisted pair cables, DSL, or the wireless technologies such as infrared ray, radio, and ultra-high frequency are included in the definition of medium. The disk/disc used herein may include a compact disc (CD), a laser disc, an optical disc, a digital versatile disk (DVD), a floppy disk, and a Blu-ray disc. While disks usually reproduce data magnetically, discs may reproduce data optically by use of a laser beam. The above combinations may also be included within the range of the computer-readable medium.

When embodiments are implemented in program codes or in code segments, the code segment may be recognized as indicating procedures, functions, subprograms, programs, routines, subroutines, modules, software packages, classes, or instructions, data structures, or program instructions. The code segment may be coupled to other code segments or hardware circuits by passing and/or receiving information, data, arguments, parameters, or memory contents. The information, arguments, parameters, data, etc., may be transferred, sent, or transmitted by using any appropriate implementation including memory sharing, message passing, token passing, network transmission, and the like. Additionally, in some embodiments, the steps and/or operations of the method or algorithm may be resident as one of the codes and/or instructions or any combination or set of them on a machine-readable medium and/or a computer-readable medium that may be incorporated into a computer program product.

In the implementation of software, the technologies described herein may be implemented in modules (e.g., procedures, functions, etc.) that perform the functions described herein. Software codes may be stored in memory units and executed by processors. The memory unit may be implemented within the processor or external to the processor. In this case, the memory unit may be communicatively connected to the processor by various ways as is well known.

In the implementation of hardware, processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or combinations thereof, for example.

What has been described above includes examples of one or more embodiments. It is, of course, not possible to describe every possible combination of components or methods for the purpose of describing the above embodiments, but those skilled in the art may recognize that many further combinations and permutations of the various embodiments are possible. Accordingly, embodiments are intended to include all alternatives, modifications and changes within the spirit and scope of the appended claims.

As used herein, the term "infer" or "inference" may refer generally to a process of determining or inferring the state of a user, a system, and/or environment from a set of observations captured by an event and/or data. The inference may be used to identify a specific situation or operation, or, for example, may generate a probability distribution of states. The inference may be probabilistic, that is, may be a calculation of the probability distribution of the corresponding states based on the consideration of events and data. The inference may also refer to a technology used to constitute higher-level events from a set of events and/or data. This inference estimates new events or operations from a set of observed events and/or stored event data, whether the events are closely correlated in time, and whether the events and data come from one or several event and data sources.

Moreover, as used in the present disclosure, the terms "component", "module", "system" and the like are not necessarily limited thereto but may include a computer-related entity such as hardware, firmware, a combination of hardware and software, software, or running software, that contains entities. For example, the component is not necessarily limited thereto but may be a process running on a processor, a processor, an object, an executable thread of execution, a program, and/or a computer. By way of example, both an application running on a processing device and the processing device may be components. One or more components may reside within a process and/or thread of execution, and the component may be localized on one computer and/or may be distributed between two or more computers. Also, these components may be executed from various computer-readable media having various data structures stored thereon. The components may communicate by local and/or remote processes, such as by following signals having one or more data packets (e.g., data from any component interacting with other systems through a network, such as the Internet, by other components and/or signals of a local system and a distributed system, for example.

According to various embodiments of the present disclosure, when a failure in which normal autonomous driving is impossible during the autonomous driving of a vehicle, a minimal risk maneuver strategy may be determined based on the fault type of the failure that has occurred in the vehicle, so that may be possible to minimize the risk of the vehicle and to improve safety.

## Claims

1. A vehicle comprising:
a sensor unit configured to detect surrounding environment of the vehicle, generate surrounding environment information, monitor a state of the vehicle, and generate vehicle state information; and
a processor configured to
control autonomous driving of the vehicle based on one or both of the surrounding environment information and the vehicle state information,
detect whether a failure occurs in a function required for autonomous driving of the vehicle based on the vehicle state information,
determine one or both of a movable time and a movable distance, for indicating a fail-operational capability (FOC) of the vehicle, based on one or both of the vehicle state information and the surrounding environment information, and
control the vehicle to be emergency stopped by performing a minimal risk maneuver based on one or both of the movable time and the movable distance.

2. The vehicle of claim 1, wherein the processor is further configured to determine a fault type of the failure based on the vehicle state information, and determine one or both of the movable time and the movable distance, based on the fault type.

3. The vehicle of claim 1, wherein the movable time comprises one or both of a fault tolerant time interval (FTTI) and a fail operational time interval (FOTI),
the FTTI being a time interval from a time point when the failure occurs to a time point when a hazardous event is predicted to occur, and
the FOTI being a time interval from a time point when the failure occurs to a time point when a safety algorithm for handling the failure is performed and the vehicle is predicted to be switched to a safe state.

4. The vehicle of claim 3, wherein the safety algorithm performs one or both of a failure handling function and an emergency operation, and
wherein the FOTI comprises one or both of a fault handling time interval (FHTI) and an emergency operation time interval (EOTI),
the FHTI being a time interval in which the failure handling function is performed in order that the vehicle is switched to the safe state, and
the EOTI being a time interval in which the emergency operation is performed in order that the vehicle is switched to the safe state.

5. The vehicle of claim 3, wherein the movable distance comprises one or both of an FTTI range indicating a movable distance during the FTTI and an FOTI range indicating a movable distance during the FOTI.

6. The vehicle of claim 3, wherein the processor is further configured to:
compare the FOTI and the FTTI,
determine a minimal risk maneuver strategy in consideration of only the FTTI, in response to the FOTI being greater than or equal to the FTTI, and
determine the minimal risk maneuver strategy in consideration of both the FOTI and the FTTI, in response to the FOTI being less than the FTTI,
wherein the minimal risk maneuver strategy comprises one or both of a minimal risk maneuver type and a stop location.

7. The vehicle of claim 6, wherein the processor is further configured to:
select a first minimal risk maneuver type having a highest priority among the minimal risk maneuver types that are performable within the FTTI, in response to the FOTI being greater than or equal to the FTTI, and
control a controller such that the vehicle is stopped according to the first selected minimal risk maneuver type.

8. The vehicle of claim 6, wherein the processor is further configured to:
select a first minimal risk maneuver type having a highest priority among the minimal risk maneuver types that are performable within the FTTI, in response to the FOTI being less than the FTTI,
determine, after the FOTI elapses, whether the function in which the failure has occurred is normally at least temporarily operated by the safety algorithm that is performed during the FOTI,
check, in response to the function in which the failure has occurred being normally at least temporarily operated, whether at least one other minimal risk maneuver type having a higher priority than that of the first selected minimal risk maneuver type is performable within the FTTI,
select, in response to the at least one other minimal risk maneuver type having a higher priority than that of the first selected minimal risk maneuver type being performable, a second minimal risk maneuver type having the highest priority among the at least one other minimal risk maneuver type, and
control a controller such that the vehicle is stopped according to the second selected minimal risk maneuver type.

9. The vehicle of claim 6, wherein the minimal risk maneuver type comprises one of or any combination of a straight stop type, an in-lane stop type, a half-shoulder stop type, and a full-shoulder stop type.

10. The vehicle of claim 1, wherein the processor is further configured to:
determine a minimal risk maneuver strategy based on one or both of the movable time and the movable distance, and
control according to the determined minimal risk maneuver strategy such that the vehicle is emergency stopped.

11. An operation method of a vehicle, the operation method comprising:
obtaining surrounding environment information and vehicle state information of the vehicle during autonomous driving of the vehicle;
detecting whether a failure occurs in a function required for the autonomous driving of the vehicle based on the vehicle state information;
determining one or both of a movable time and a movable distance, to indicate a fail-operational capability (FOC) of the vehicle, based on one or both of the vehicle state information and the surrounding environment information; and
performing an emergency stop by performing a minimal risk maneuver based on one or both of the movable time and the movable distance.

12. The operation method of claim 11, wherein the determining one or both of the movable time and the movable distance comprises:
determining a fault type of the failure based on the vehicle state information; and
determining one or both of the movable time and the movable distance, based on the fault type.

13. The operation method of claim 11, wherein the movable time comprises one or both of a fault tolerant time interval (FTTI) and a fail operational time interval (FOTI),
the FTTI being a time interval from a time point when the failure occurs to a time point when a hazardous event is predicted to occur, and
the FOTI being a time interval from a time point when the failure occurs to a time point when a safety algorithm for handling the failure is performed and the vehicle is predicted to be switched to a safe state.

14. The operation method of claim 13, wherein the safety algorithm performs one or both of a failure handling function and an emergency operation, and
wherein the FOTI comprises one or both of a fault handling time interval (FHTI) and an emergency operation time interval (EOTI),
the FHTI being a time interval in which the failure handling function is performed in order that the vehicle is switched to the safe state, and
the EOTI being a time interval in which the emergency operation is performed in order that the vehicle is switched to the safe state.

15. The operation method of claim 13, wherein the movable distance comprises one or both of an FTTI range indicating a movable distance during the FTTI and an FOTI range indicating a movable distance during the FOTI.

16. The operation method of claim 13, wherein the performing the emergency stop comprises:
comparing the FOTI and the FTTI;
determining a minimal risk maneuver strategy in consideration of the FTTI and not the FOTI, in response to the FOTI being greater than or equal to the FTTI; and
determining the minimal risk maneuver strategy in consideration of both the FOTI and the FTTI, in response to the FOTI being less than the FTTI,
wherein the minimal risk maneuver strategy comprises one or both of a minimal risk maneuver type and a stop location.

17. The operation method of claim 16, wherein the determining the minimal risk maneuver strategy in consideration of the FTTI and not the FOTI comprises:
selecting a first minimal risk maneuver type having a highest priority among the minimal risk maneuver types that are performable within the FTTI; and
controlling such that the vehicle is stopped according to the first selected minimal risk maneuver type.

18. The operation method of claim 16, wherein the determining the minimal risk maneuver strategy in consideration of both the FOTI and the FTTI comprises:
selecting a first minimal risk maneuver type having a highest priority among the minimal risk maneuver types that are performable within the FTTI,
determining, after the FOTI elapses, whether the function in which the failure has occurred is normally at least temporarily operated by the safety algorithm that is performed during the FOTI,
checking, in response to the function in which the failure has occurred being normally at least temporarily operated, whether at least one other minimal risk maneuver type having a higher priority than that of the first selected minimal risk maneuver type is performable within the FTTI,
selecting, in response to the at least one other minimal risk maneuver type having a higher priority than that of the first selected minimal risk maneuver type being performable, a second minimal risk maneuver type having the highest priority among the at least one other minimal risk maneuver type, and
control a controller such that the vehicle is stopped according to the second selected minimal risk maneuver type.

19. The operation method of claim 16, wherein the minimal risk maneuver type comprises one of or an combination of a straight stop type, an in-lane stop type, a half-shoulder stop type, and a full-shoulder stop type.

20. The operation method of claim 11, wherein the performing the emergency stop by performing a minimal risk maneuver based on one or both of the movable time and the movable distance comprises:
determining a minimal risk maneuver strategy based on one or both of the movable time and the movable distance, and
controlling according to the determined minimal risk maneuver strategy such that the vehicle is emergency stopped.
